# EUROPÄISCHE PATENTSCHRIFT

(11) **EP 0 784 829 B1**
(45) Veröffentlichungstag und Bekanntmachung des Hinweises auf die Patenterteilung: **22.07.1998**
(21) Anmeldenummer: 95932622.4
(22) Anmeldetag: 25.09.1995
(51) Int. Cl.: G06K 19/077

(54) **TRÄGERANORDNUNG ZUM EINBAU IN EINE KONTAKTLOSE CHIPKARTE**
SUPPORT ARRANGEMENT TO BE EMBEDDED INTO A CONTACTLESS CHIP CARD
SYSTEME DE SUPPORT A INTEGRER DANS UNE CARTE A PUCE SANS CONTACT

(30) Priorität: 30.09.1994 DE 4435138
(43) Veröffentlichungstag der Anmeldung: 23.07.1997
(73) Patentinhaber: SIEMENS AKTIENGESELLSCHAFT, 80333 München (DE)
(72) Erfinder: MUNDIGL, Josef, D-93182 Duggendorf (DE)
(86) Internationale Anmeldenummer: DE9501327
(87) Internationale Veröffentlichungsnummer: WO9610803

(56) Entgegenhaltungen:
- EP-A- 0 376 062
- EP-A- 0 481 776
- WO-A-88/08592

## Beschreibung

Die Erfindung betrifft eine Trägeranordnung zum Einbau in eine kontaktlose Chipkarte, die die Außenabmessungen der Chipkarte aufweist, mit einer Trägerfolie auf der zumindest eine Transpondereinheit, die mit einem Halbleiterchip und mit einer damit verbundenen Antennenspule gebildet ist, angeordnet ist, wobei die Windungen der Antennenspule im wesentlichen entlang dem Außenrand der Trägeranordnung verlaufen.

Eine solche Trägeranordnung ist aus der EP 0 481 776 A3 bekannt. Die dortige Antennenspule ist jedoch als planare Spule ausgebildet, die zusammen mit anderen Schaltungsmustern auf der Trägerfolie hergestellt wird.

Bei kontaktlosen Chipkarten wird die zum Betreiben des in der Chipkarte enthaltenen Halbleiterchips nötige Energie in allgemeinster Form mittels elektromagnetischer Wellen von einem Terminal zur Chipkarte übertragen. Auch der Datenverkehr zwischen dem Terminal und der Chipkarte erfolgt auf diesem Weg. Zu diesem Zweck sind sowohl im Terminal als auch auf der Chipkarte Antennenspulen vorgesehen, die die elektromagnetischen Wellen senden und empfangen. In der Chipkarte muß also eine aus dem Halbleiterchip und der damit verbundenen Antennenspule bestehende Transpondereinheit untergebracht werden.

Oftmals wird die Transpondereinheit an einem anderen Ort gefertigt als die Chipkarte, so daß die Gefahr einer Beschädigung oder Deformation der Spule auf dem Transportweg besteht.

Aufgabe der Erfindung ist es somit, eine Trägeranordnung anzugeben, bei der die Spule und die Verbindung der Spule mit dem Halbleiterchip insbesondere beim Transport geschützt sind.

Die Aufgabe wird gemäß Anspruch 1 bei einer gattungsgemäßen Trägeranordnung dadurch gelöst daß die Antennenspule als gewickelte Drahtspule ausgebildet ist, und daß auf der zumindest einen Transpondereinheit eine weitere Folie angeordnet ist.

Durch die erfindungsgemäße lagefixierte Anordnung der Transpondereinheit auf einer Trägerfolie bleiben die Abmessungen der Spule selbst bei Deformierung der Trägerfolie erhalten. Somit können in vorteilhafter Weise auf einer Endlos-Trägerfolie eine Vielzahl von Transpondereinheiten hintereinander aufgebracht werden und beispielsweise zum Transport auf eine Rolle aufgewickelt werden. Die erfindungsgemäße Trageranordnung erfordert einen minimalen Montageaufwand. Eine mechanische Beeinflussung, die zu einer Beschädigung der Antenne und der Verbindungsstelle zwischen Antenne und Halbleiterchip führen konnte, ist durch die erfindungsgemäße Trägeranordnung ebenfalls minimiert. Da sich die Abmessungen der Spule auf diese Weise nicht mehr ändern, erreicht man eine hohe Reproduzierbarkeit der wesentlichen Systemparameter wie beispielsweise der Spulengüte. Die erfindungsgemäße Trägeranordnung kann somit lage- und formtreu der Weiterverarbeitung zugeführt werden.

In vorteilhafter Weiterbildung der Erfindung ist die Transpondereinheit durch eine weitere Folie abgedeckt. Dadurch kann sie in einfacher Weise vor Verunreinigungen geschützt werden. Besonders vorteilhaft ist es, wenn in der weiteren Folie im Bereich des Halbleiterchips eine Ausnehmung vorgesehen ist. Dadurch laßt sich eine geringere Dicke der Trageranordnung erreichen. In vorteilhafter Weise ist zumindest eine der Folien mit einer Klebeschicht versehen, so daß die Transpondereinheit quasi hermetisch zwischen den beiden Folien verpackt ist.

Ein besonderer Vorteil der erfindungsgemaßen Trägeranordnung ist, daß sie nach Ausstanzen aus der Endlostragerfolie komplett in eine Chipkarte, die beispielsweise durch Laminiertechnik oder auch durch Druckgußverfahren hergestellt wird, eingearbeitet werden kann. Dadurch stellen die Trägerfolie und die weitere Folie keine verlorene Form dar. Besonders vorteilhaft ist es dabei, wenn die Trägerfolie und die weitere Folie aus demselben Material wie die restliche Karte sind.

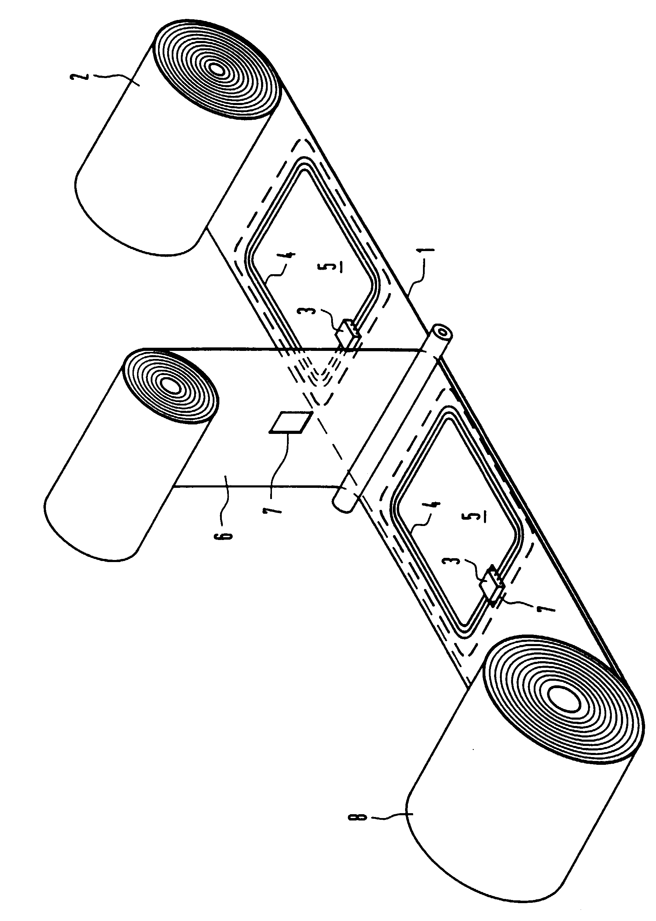

Die Erfindung wird anhand eines Ausführungsbeispiels mit Hilfe einer Figur naher erläutert. Die Figur zeigt eine Trägerfolie 1, die von einer Rolle 2 abgespult wird. Die Trägerfolie 1 ist mit einer Klebeschicht versehen, auf die eine mit einem Halbleiterchip 3 und einer Spule 4 gebildete Transpondereinheit 5 aufgebracht wird. Diese Anordnung wird anschließend mittels einer Deckfolie 6 hermetisch verpackt, wobei im Bereich des Halbleiterchips 3 in vorteilhafter Weise eine Aussparung 7 in der Deckfolie vorgesehen ist, um die Dicke der gesamten Trägeranordnung möglichst gering zu halten. Die aus einer zwischen zwei Folien verpackten Transpondereinheit 5 bestehende Trägeranordnung wird anschließend zum Weitertransport vorteilhafterweise auf einer Rolle 8 aufgewickelt.

## Patentansprüche

1. Trägeranordnung, die die Außenabmessungen einer Chipkarte aufweist, mit einer Trägerfolie (1) auf der zumindest eine Transpondereinheit (5), die mit einem Halbleiterchip (3) und mit einer damit verbundenen Antennenspule (4) gebildet ist, angeordnet ist, wobei die Windungen der Antennenspule (4) im wesentlichen entlang dem Außenrand der Trägeranordnung verlaufen,
**dadurch gekennzeichnet,**
daß die Antennenspule (4) als gewickelte Drahtspule ausgebildet ist,
und daß auf der zumindest einen Transpondereinheit (5) eine weitere Folie (6) angeordnet ist.

2. Trägeranordnung nach Anspruch 1,
**dadurch gekennzeichnet**, daß die weitere Folie (6) im Bereich des Halbleiterchips (3) eine Ausnehmung (7) aufweist.

3. Trägeranordnung nach einem der Ansprüche 1 bis 2,
**dadurch gekennzeichnet**, daß zumindest eine der beiden Folien (1,6) auf der der Transpondereinheit (5) zugewandten Seite mit einer Klebeschicht versehen ist.

## Claims

1. Carrier arrangement which has the external dimensions of a smart card, having a carrier film (1), on which is arranged at least one transponder unit (5) which is formed by a semiconductor chip (3) and by an antenna coil (4) connected thereto, the turns of the antenna coil (4) running essentially along the outer edge of the carrier arrangement, characterized in that the antenna coil (4) is designed as a wound wire coil, and in that a further film (6) is arranged on the at least one transponder unit (5).

2. Carrier arrangement according to Claim 1, characterized in that the further film (6) has a recess (7) in the region of the semiconductor chip (3).

3. Carrier arrangement according to either of Claims 1 and 2, characterized in that at least one of the two films (1, 6) is provided with an adhesive layer on the side facing the transponder unit (5).

## Revendications

1. Système de support ayant les dimensions extérieures d'une carte à puce, avec une feuille de support (1) sur laquelle est disposée au moins une unité de transpondeur (5) qui est formée par une puce semi-conductrice (3) et une bobine d'antenne (4) bordée à celle-ci, les enroulements de la bobine d'antenne (4) longeant essentiellement la bordure extérieure du système de support, **caractérisé en ce que** la bobine d'antenne (4) est réalisée en tant que bobine de fil métallique enroulé, et en ce qu'une feuille supplémentaire (6) est disposée sur la - au moins une - unité de transpondeur (5).

2. Système de support selon la revendication 1, **caractérisé en ce que** l'autre feuille (6) présente un évidemment (7) à l'endroit de la puce semi-conductrice (3).

3. Système de support selon l'une des revendications 1 à 2, **caractérisé en ce qu**'au moins l'une des deux feuilles (1, 6) est dotée d'une couche de colle sur le côté orienté vers l'unité de transpondeur (5).
